# EUROPÄISCHE PATENTANMELDUNG

(11) **EP 3 293 590 A1**
(43) Veröffentlichungstag der Anmeldung: **14.03.2018**
(21) Anmeldenummer: 16188567.8
(22) Anmeldetag: 13.09.2016
(51) Int. Cl.: G05B 19/4097, G05B 19/41

(54) **AUTOMATISCHE GÜTEAUSWERTUNG EINER ABFOLGE VON BEWEGUNGSBEFEHLEN**

(71) Anmelder: Siemens Aktiengesellschaft, 80333 München (DE)
(72) Erfinder: Stolper, Thilo, 81929 München (DE)

(57) **Zusammenfassung**

Bewegungsbefehle einer Abfolge von Bewegungsbefehlen definieren jeweils eine von einem Werkzeug (6) einer Bearbeitungsmaschine relativ zu einem Werkstück (7) einzunehmende Position (p). Bei der Ausführung der Abfolge von Bewegungsbefehlen durch eine Steuereinrichtung (5) der Bearbeitungsmaschine bearbeitet das Werkzeug (6) das Werkstück (7) zumindest zeitweise. Die Bewegungsbefehle werden bei ihrer Ausführung durch die Steuereinrichtung (5) der Bearbeitungsmaschine in eine die definierten Positionen (p) enthaltende Bahnkurve umgesetzt. Es wird eine Darstellung der durch die Abfolge von Bewegungsbefehlen definierten Bahnkurve an einen Anwender (8) ausgegeben. Die Abstände (a) der Positionen (p) unmittelbar aufeinanderfolgender Bewegungsbefehle voneinander werden ermittelt. Positionen (p) unmittelbar aufeinanderfolgender Bewegungsbefehle, deren Abstand (a) unterhalb eines vorbestimmten Minimalabstands (a1) liegt, werden in der Darstellung mittels einer Markierung (9) hervorgehoben.

## Beschreibung

Die vorliegende Erfindung geht aus von einem Auswertungsverfahren für eine Abfolge von Bewegungsbefehlen,
- wobei die Bewegungsbefehle jeweils eine von einem Werkzeug einer Bearbeitungsmaschine relativ zu einem Werkstück einzunehmende Position definieren,
- wobei bei der Ausführung der Abfolge von Bewegungsbefehlen durch eine Steuereinrichtung der Bearbeitungsmaschine das Werkzeug zumindest zeitweise das Werkstück bearbeitet,
- wobei die Bewegungsbefehle bei ihrer Ausführung durch die Steuereinrichtung der Bearbeitungsmaschine in eine die definierten Positionen enthaltende Bahnkurve umgesetzt werden,
- wobei eine Darstellung der durch die Abfolge von Bewegungsbefehlen definierten Bahnkurve an einen Anwender ausgegeben wird.

Mit "Positionen" ist im Rahmen der vorliegenden Erfindung ausschließlich eine translatorische Positionierung des Werkzeugs relativ zum Werkstück gemeint. Soweit eine Orientierung des Werkzeugs relativ zum Werkstück gemeint ist, wird auch der entsprechende Begriff ("Orientierung") verwendet. Der Begriff "Lage" kann entweder eine ausschließlich translatorische Positionierung des Werkzeugs relativ zum Werkstück bedeuten oder eine translatorische Positionierung des Werkzeugs relativ zum Werkstück bedeuten, bei der zusätzlich auch eine Orientierung des Werkzeugs relativ zum Werkstück eingestellt ist.

Die vorliegende Erfindung geht weiterhin aus von einem Computerprogramm, das Maschinencode umfasst, der von einer Recheneinrichtung abarbeitbar ist, wobei die Abarbeitung des Maschinencodes durch die Recheneinrichtung bewirkt, dass die Recheneinrichtung ein derartiges Auswertungsverfahren ausführt.

Die vorliegende Erfindung geht weiterhin aus von einer Recheneinrichtung, wobei die Recheneinrichtung mit einem derartigen Computerprogramm programmiert ist, so dass sie im Betrieb ein derartiges Auswertungsverfahren ausführt.

Im Rahmen der Erstellung von Teileprogrammen - das heißt von Programmen, mittels derer numerische Steuerungen Bearbeitungsmaschinen steuern, so dass diese Bearbeitungen an Werkstücken vornehmen - wird in der Regel zunächst ein CAD-Datensatz (CAD = Computer Aided Design) erstellt. Der entsprechende CAD-Datensatz legt die Form des herzustellenden Werkstücks fest. Er umfasst jedoch in der Regel keinerlei Angaben über die hierfür erforderlichen Bearbeitungsvorgänge. Der CAD-Da-tensatz wird daher mittels einer Recheneinrichtung in einen CAM-Datensatz (CAM = Computer Aided Manufacturing) umgesetzt. Der CAM-Datensatz legt das später auszuführende Teileprogramm fest. Er umfasst eine Vielzahl von Abfolgen von Bewegungsbefehlen im Sinne der vorliegenden Erfindung.

Theoretisch ist die Umsetzung des CAD-Datensatzes in den CAM-Datensatz perfekt. Gleiches gilt für spätere Prozessschritte. In der Praxis kann es jedoch geschehen, dass die spätere Bearbeitung des Werkstücks zu Oberflächenfehlern führt. Die Ursachen für derartige Oberflächenfehler sind vielfältiger Natur. Vor allem aber kann dem Werkstück oftmals nicht mehr angesehen werden, welcher konkrete einzelne Bearbeitungsvorgang den jeweiligen Oberflächenfehler hervorgerufen hat.

Aus der EP 1 315 058 A1 ist ein Verfahren zur Darstellung, Untersuchung und Optimierung einer Oberflächengüte anhand von CNC-Programmdaten bekannt. Bei diesem Verfahren beschreiben die CNC-Programmdaten Bahnpunkte von Raumkurven. Für eine Mehrzahl von benachbarten Bahnpunkten werden die zugehörigen Normalenvektoren ermittelt und dargestellt. Normalenvektoren, die im wesentlichen in die gleiche Richtung gerichtet sind, signalisieren Bereiche hoher Oberflächengüte, während Normalenvektoren, die in (deutlich) abweichende Richtungen zeigen, Ungenauigkeiten der resultierenden Oberfläche signalisieren.

Das Verfahren der EP 1 315 058 A1 führt bereits zu einer deutlichen Verbesserung bei der Umsetzung des CAD-Datensatzes in den CAM-Datensatz. Insbesondere können Stellen des CAM-Datensatzes identifiziert werden, die eine unzureichende Güte der Oberfläche des bearbeiteten Werkstücks bewirken. Das Verfahren der EP 1 315 058 A1 führt jedoch nicht in allen Fällen zum gewünschten Ergebnis.

Die Aufgabe der vorliegenden Erfindung besteht darin, ein Auswertungsverfahren zu schaffen, mit dem die Stellen des CAM-Datensatzes, deren Ausführung zu einer verringerten Oberflächengüte des bearbeiteten Werkstücks führen können, zuverlässig und umfassend identifiziert werden können.

Die Aufgabe wird durch ein Auswertungsverfahren mit den Merkmalen des Anspruchs 1 gelöst. Vorteilhafte Ausgestaltungen des Auswertungsverfahrens sind Gegenstand der abhängigen Ansprüche 2 bis 13.

Erfindungsgemäß wird ein Auswertungsverfahren der eingangs genannten Art dadurch ausgestaltet,
- dass die Abstände der Positionen unmittelbar aufeinanderfolgender Bewegungsbefehle voneinander ermittelt werden und
- dass Positionen unmittelbar aufeinanderfolgender Bewegungsbefehle, deren Abstand unterhalb eines vorbestimmten Minimalabstands liegt, in der Darstellung mittels einer Markierung hervorgehoben werden.

Diese Vorgehensweise beruht auf der Erkenntnis, dass bei der Umsetzung des CAD-Datensatzes in den CAM-Datensatz die Stützstellen (= definierte Positionen), zwischen denen von der Steuereinrichtung im Rahmen der Ausführung der Abfolge von Bewegungsbefehlen eine Interpolation vorgenommen wird, für problemlos auszuführende Bearbeitungsvorgänge in der Regel örtlich weit auseinander liegen. Bei nur umständlich auszuführenden Bearbeitungsvorgängen muss hingegen eine Vielzahl von örtlich eng aufeinanderfolgenden Positionen angefahren werden. Derartige Sachverhalte bewirken oft Oberflächenfehler.

In manchen Fällen (beispielsweise bei manchen dreiachsigen Werkzeugmaschinen) ist ein Verfahren des Werkzeugs relativ zum Werkstück nur in den drei translatorischen Richtungen möglich. In anderen Fällen (beispielsweise bei manchen fünfachsigen Werkzeugmaschinen) ist zusätzlich auch ein Einstellen der Orientierung des Werkzeugs relativ zum Werkstück möglich. In den letztgenannten Fällen definieren die Bewegungsbefehle zusätzlich zur jeweiligen Position auch eine von dem Werkzeug relativ zum Werkstück einzunehmende Orientierung. Ferner werden in diesen Fällen die Bewegungsbefehle bei ihrer Ausführung durch die Steuereinrichtung der Bearbeitungsmaschine derart umgesetzt, das Werkzeug relativ zum Werkstück an den definierten Positionen die entsprechende Orientierung einnimmt.

Es ist möglich, auch in derartigen Fällen die Auswertung auf die Position als solche zu beschränken. Vorzugsweise ist in derartigen Fällen das Verfahren jedoch dadurch ausgestaltet,
- dass zusätzlich die Änderung der Orientierung unmittelbar aufeinanderfolgender Bewegungsbefehle ermittelt wird und
- dass Positionen unmittelbar aufeinanderfolgender Bewegungsbefehle, deren Änderung der Orientierung oberhalb einer ersten Maximaländerung liegt, mittels einer Markierung hervorgehoben werden.

Es ist möglich, dass die erste Maximaländerung vorbestimmt ist, also stets denselben Wert aufweist. Vorzugsweise jedoch wird die erste Maximaländerung in Abhängigkeit von dem Abstand der Positionen der jeweiligen unmittelbar aufeinanderfolgenden Bewegungsbefehle voneinander bestimmt.

Es ist auch eine noch weitergehende Auswertung der Orientierungen möglich. Insbesondere ist es möglich,
- dass für die von dem Werkzeug einzunehmenden Positionen jeweils Paare von Bewegungsbefehlen ermittelt werden, deren jeweilige Position unterhalb eines vorbestimmten ersten Mindestabstands liegt,
- dass für die Paare von Bewegungsbefehlen die Differenz der von dem Werkzeug relativ zum Werkstück einzunehmenden Orientierungen ermittelt wird und
- dass Positionen von Paaren von Bewegungsbefehlen, bei denen die Differenz der Orientierungen oberhalb einer zweiten Maximaländerung liegt, mittels einer Markierung hervorgehoben werden.

Diese Art der Auswertung führt zu einer noch umfassenderen Auswertung der Bewegungsbefehle.

Analog zur ersten Maximaländerung ist es möglich, dass die zweite Maximaländerung in Abhängigkeit von dem Abstand der Positionen der beiden Bewegungsbefehle des jeweiligen Paares von Bewegungsbefehlen voneinander bestimmt wird.

In aller Regel definieren die Bewegungsbefehle zusätzlich zur jeweiligen Position nicht nur eine von dem Werkzeug relativ zum Werkstück jeweils einzunehmende Orientierung, sondern auch eine jeweilige Bewegungsrichtung. Insbesondere werden die Bewegungsbefehle bei ihrer Ausführung durch die Steuereinrichtung der Bearbeitungsmaschine derart umgesetzt, dass das Werkzeug relativ zum Werkstück an den definierten Positionen nicht nur die entsprechende Orientierung einnimmt, sondern auch in der entsprechenden Bewegungsrichtung verfahren wird. Vorzugsweise wird in diesem Fall das Auswertungsverfahren dadurch ausgestaltet,
- dass für die von dem Werkzeug einzunehmenden Positionen zusätzlich jeweils das Kreuzprodukt der Bewegungsrichtung und der Orientierung ermittelt wird,
- dass die Änderung der Richtung des Kreuzprodukts unmittelbar aufeinanderfolgender Bewegungsbefehle ermittelt wird und
- dass Positionen unmittelbar aufeinanderfolgender Bewegungsbefehle, deren Änderung der Richtung des Kreuzprodukts oberhalb einer dritten Maximaländerung liegt, mittels einer Markierung hervorgehoben werden.

Diese Art der Auswertung führt zu einer noch umfassenderen Auswertung der Bewegungsbefehle.

Analog zur ersten Maximaländerung ist es möglich, dass die dritte Maximaländerung in Abhängigkeit von dem Abstand der Positionen der jeweiligen unmittelbar aufeinanderfolgenden Bewegungsbefehle voneinander bestimmt wird.

Ebenso wie bei den Orientierungen ist es möglich,
- dass für die von dem Werkzeug einzunehmenden Positionen jeweils Paare von Bewegungsbefehlen ermittelt werden, deren jeweilige Position unterhalb eines vorbestimmten zweiten Mindestabstands liegt,
- dass für die Paare von Bewegungsbefehlen die Differenz der Richtungen der Kreuzprodukte ermittelt wird und
- dass Positionen von Paaren von Bewegungsbefehlen, bei denen die Differenz der Richtungen der Kreuzprodukte oberhalb einer vierten Maximaländerung liegt, mittels einer Markierung hervorgehoben werden.

Diese Art der Auswertung führt zu einer noch umfassenderen Auswertung der Bewegungsbefehle.

Analog zur zweiten Maximaländerung ist es möglich, dass die vierte Maximaländerung in Abhängigkeit von dem Abstand der Positionen der beiden Bewegungsbefehle des jeweiligen Paares von Bewegungsbefehlen voneinander bestimmt wird.

Falls die Bewegungsbefehle zusätzlich zur jeweiligen Position eine von dem Werkzeug relativ zum Werkstück jeweils einzunehmende Orientierung und eine jeweilige Bewegungsrichtung definieren, kann das Auswertungsverfahren weiterhin dadurch ausgestaltet werden,
- dass für die von dem Werkzeug einzunehmenden Positionen zusätzlich anhand der Bewegungsrichtung und der Orientierung ein orthogonal zu der Oberfläche des Werkstücks an der jeweiligen Position orientierter Normalenvektor ermittelt wird,
- dass die Änderung der Richtung des Normalenvektors unmittelbar aufeinanderfolgender Bewegungsbefehle ermittelt wird und
- dass Positionen unmittelbar aufeinanderfolgender Bewegungsbefehle, deren Änderung der Richtung des Normalenvektors oberhalb einer fünften Maximaländerung liegt, mittels einer Markierung hervorgehoben werden.

Analog zur ersten Maximaländerung ist es möglich, dass die fünfte Maximaländerung in Abhängigkeit von dem Abstand der Positionen der jeweiligen unmittelbar aufeinanderfolgenden Bewegungsbefehle voneinander bestimmt wird.

Weiterhin ist es in diesem Fall zusätzlich möglich,
- dass für die von dem Werkzeug einzunehmenden Positionen jeweils Paare von Bewegungsbefehlen ermittelt werden, deren jeweilige Position unterhalb eines vorbestimmten dritten Mindestabstands liegt,
- dass für die Paare von Bewegungsbefehlen die Differenz der Richtungen der Normalenvektoren ermittelt wird und
- dass Positionen von Paaren von Bewegungsbefehlen, bei denen die Differenz der Richtungen der Normalenvektoren oberhalb einer sechsten Maximaländerung liegt, mittels einer Markierung hervorgehoben werden.

Analog zur ersten Maximaländerung ist es möglich, dass die sechste Maximaländerung in Abhängigkeit von dem Abstand der Positionen der jeweiligen unmittelbar aufeinanderfolgenden Bewegungsbefehle voneinander bestimmt wird.

Die Aufgabe wird weiterhin durch ein Computerprogramm mit den Merkmalen des Anspruchs 14 gelöst. Erfindungsgemäß ist ein Computerprogramm der eingangs genannten Art derart ausgestaltet, dass die Abarbeitung des Computerprogramms durch die Recheneinrichtung bewirkt, dass die Recheneinrichtung ein erfindungsgemäßes Auswertungsverfahren ausführt.

Die Aufgabe wird weiterhin durch eine Recheneinrichtung mit den Merkmalen des Anspruchs 15 gelöst. Erfindungsgemäß ist die Recheneinrichtung mit einem erfindungsgemäßen Computerprogramm programmiert, so dass sie im Betrieb ein erfindungsgemäßes Auswertungsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
FIG 1 eine Recheneinrichtung,
FIG 2 ein Ablaufdiagramm,
FIG 3 eine Bearbeitungsmaschine,
FIG 4 ein Werkstück und durch Abfolgen von Bewegungsbefehlen definierte Bahnkurven
FIG 5 Bahnkurven,
FIG 6 ein Werkstück, ein Werkzeug und verschiedene Richtungen,
FIG 7 ein Ablaufdiagramm,
FIG 8 mögliche funktionale Verläufe,
FIG 9 einen möglichen funktionalen Verlauf,
FIG 10 ein Ablaufdiagramm,
FIG 11 ein Ablaufdiagramm,
FIG 12 ein Ablaufdiagramm,
FIG 13 ein Ablaufdiagramm und
FIG 14 ein Ablaufdiagramm.

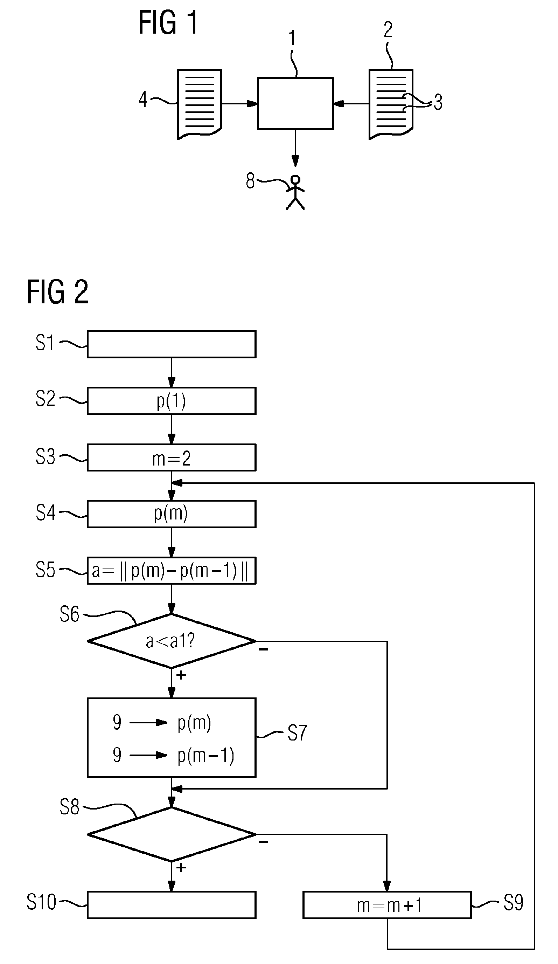

Gemäß FIG 1 ist eine Recheneinrichtung 1 mit einem Computerprogramm 2 programmiert. Das Computerprogramm 2 umfasst Maschinencode 3, der von der Recheneinrichtung 1 abarbeitbar ist. Die Abarbeitung des Maschinencodes 3 durch die Recheneinrichtung 1 bewirkt, dass die Recheneinrichtung 1 ein Auswertungsverfahren ausführt, das nachstehend in Verbindung mit FIG 2 und den weiteren FIG näher erläutert wird.

Gemäß FIG 2 wird der Recheneinrichtung 1 in einem Schritt S1 eine Abfolge von Bewegungsbefehlen bekannt. Beispielsweise kann der Recheneinrichtung 1 im Schritt S1 ein Teileprogramm 4 (siehe FIG 1) bekannt werden, das die Abfolge umfasst.

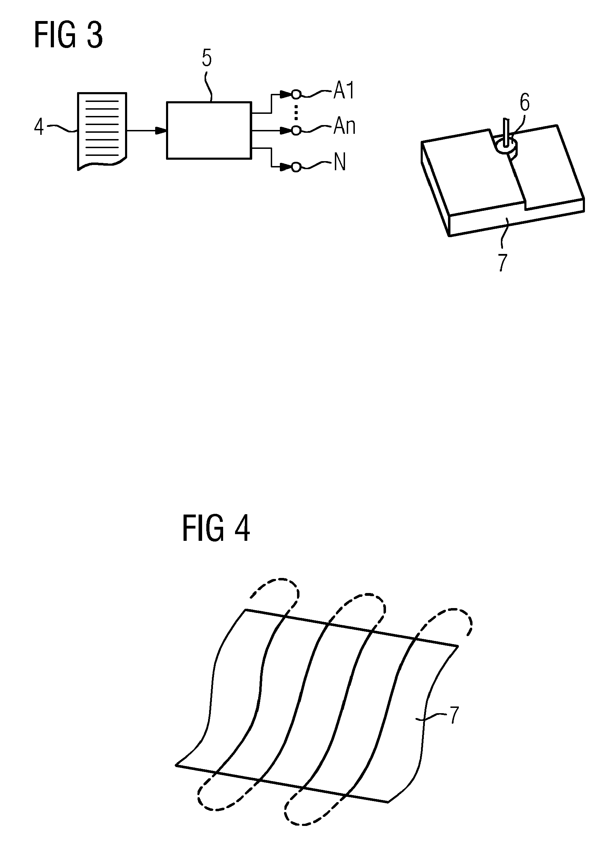

Das Teileprogramm 4 und damit auch die Abfolge von Bewegungsbefehlen sind gemäß FIG 3 auch einer Steuereinrichtung 5 (beispielsweise einer numerischen Steuerung) zuführbar, welche das Teileprogramm 4 und damit auch die Abfolge von Bewegungsbefehlen ausführen kann. Die Steuereinrichtung 5 kann mit der Recheneinrichtung 1 identisch sein. Auch ist es möglich, dass die Steuereinrichtung 5 und die Recheneinrichtung 1 in einer integralen Einheit zusammengefasst sind. Ebenso kann es sich bei der Steuereinrichtung 5 jedoch auch um eine von der Recheneinrichtung 1 verschiedene Einrichtung handeln.

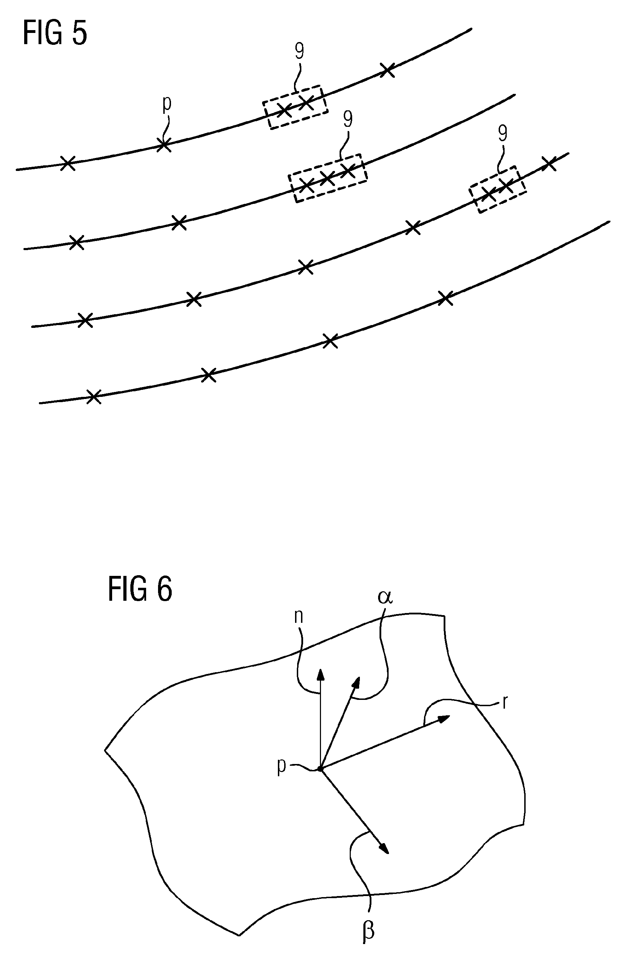

Im Rahmen der Ausführung des Teileprogramms 4 ermittelt die Steuereinrichtung 5 für mehrere lagegeregelte Achsen A1 bis An der Bearbeitungsmaschine jeweils den entsprechenden Sollwert für die jeweilige lagegeregelte Achse A1 bis An und steuert die lagegeregelten Achsen A1 bis An gemäß den entsprechenden Sollwerten an. Dadurch wird ein Werkzeug 6 der Bearbeitungsmaschine relativ zu einem Werkstück 7 zumindest translatorisch positioniert, eventuell zusätzlich auch orientiert. Die Bewegungsbefehle definieren somit eine von einem Werkzeug 6 relativ zu dem Werkstück 7 jeweils einzunehmende Position p. Rein beispielhaft sind in den FIG 4 und 5 einige derartige Positionen p in durchgezogenen Linien dargestellt. Die Anzahl n an lagegeregelten Achsen A1 bis An beträgt in der Regel mindestens drei. Soweit erforderlich, können von der Steuereinrichtung 5 zusätzlich eine oder mehrere drehzahlgeregelte Achsen N mit angesteuert werden.

Die Ansteuerung der lagegeregelten Achsen A1 bis An und damit die Ausführung der Abfolge von Bewegungsbefehlen durch die Steuereinrichtung 5 der Bearbeitungsmaschine bewirkt, wie insbesondere durch die Darstellung in den FIG 3 und 4 ersichtlich ist, dass bei der Ausführung der Abfolge von Bewegungsbefehlen durch die Steuereinrichtung 5 das Werkzeug 6 das Werkstück 7 zumindest zeitweise bearbeitet. Beispielsweise kann das Werkzeug 6 sich während dieser Zeiten mit dem Werkstück im Eingriff befinden. Es sind jedoch auch kontaktfreie Bearbeitungen möglich, beispielsweise eine Laserbeschriftung.

Aus den FIG 4 und 5 ist weiterhin ersichtlich, dass die Bewegungsbefehle bei ihrer Ausführung durch die Steuereinrichtung 5 in eine Bahnkurve umgesetzt werden, welche die definierten Positionen p enthält. Die Positionen p sind in FIG 4 nicht einzeln dargestellt. In FIG 5 sind sie teilweise durch kleine Kreuzchen symbolisiert.

In einem Schritt S2 selektiert die Recheneinrichtung 1 den ersten Bewegungsbefehl der betrachteten Abfolge von Bewegungsbefehlen und ermittelt die zugehörige Position p(1). In einem Schritt S3 setzt die Recheneinrichtung 1 einen Index m auf den Wert 2. Mit dem Bezugszeichen m wird nachfolgend teilweise auch der m-te Bewegungsbefehl der Abfolge von Bewegungsbefehlen bezeichnet.

In einem Schritt S4 selektiert die Recheneinrichtung 1 den m-ten Bewegungsbefehl der betrachteten Abfolge und ermittelt die zugehörige Position p(m). In einem Schritt S5 ermittelt die Recheneinrichtung 1 den Abstand a der Position p(m) des m-ten Bewegungsbefehls zur Position p(m-1) des m-1-ten Bewegungsbefehls. Beispielsweise kann im Schritt S5 der normale geometrische (euklidische) Abstand ermittelt werden. Alternativ kann der Abstand a mittels einer anderen Art von Norm ermittelt werden. In einem Schritt S6 prüft die Recheneinrichtung 1, ob der ermittelte Abstand a unterhalb eines vorbestimmten Minimalabstands a1 liegt. Wenn dies der Fall ist, ordnet die Recheneinrichtung 1 in einem Schritt S7 mindestens einer der beiden betreffenden Positionen - also entweder der Position p(m) des m-ten Bewegungsbefehls oder der Position p(m-1) des m-1-ten Bewegungsbefehls - eine jeweilige Markierung 9 zu. Vorzugsweise erfolgt die Zuordnung der Markierung 9 zu beiden betreffenden Positionen p(m), p(m-1). Anderenfalls wird der Schritt S7 übersprungen.

In einem Schritt S8 prüft die Recheneinrichtung 1, ob sie bereits den letzten Bewegungsbefehl der betrachteten Abfolge erreicht hat. Wenn dies nicht der Fall ist, erhöht die Recheneinrichtung 1 in einem Schritt S9 den Index m und geht sodann zum Schritt S4 zurück. Anderenfalls ist die Vorgehensweise von FIG 2 nahezu abgeschlossen. Insbesondere geht die Recheneinrichtung 1 lediglich noch zu einem Schritt S10 über, in dem die Recheneinrichtung 1 eine Darstellung der durch die Abfolge von Bewegungsbefehlen definierten Bahnkurve an einen Anwender 8 (siehe FIG 1) ausgibt. Innerhalb der Abfolge werden diejenigen Positionen p, deren Abstand a unterhalb des Minimalabstands a1 liegt, mittels einer Markierung 9 hervorgehoben. Beispielsweise können die entsprechenden Positionen p entsprechend der Darstellung in FIG 5 umrandet sein. Auch andere Darstellungsarten sind möglich. Beispielsweise können die entsprechenden Positionen p blinkend dargestellt werden oder in einer anderen Farbe als die übrigen Positionen p dargestellt werden.

Aufgrund des Verfahrens des Werkzeugs 6 relativ zum Werkstück 7 definieren die Bewegungsbefehle entsprechend der Darstellung in FIG 6 zusätzlich zur jeweiligen Position p auch eine jeweilige Bewegungsrichtung r. Die Bewegungsbefehle werden bei ihrer Ausführung durch die Steuereinrichtung 5 der Bearbeitungsmaschine also derart umgesetzt, dass das Werkzeug 6 relativ zum Werkstück 7 an den definierten Positionen p in der entsprechenden Bewegungsrichtung r verfahren wird.

In vielen Fällen definieren die Bewegungsbefehle entsprechend der Darstellung in FIG 6 zusätzlich zur jeweiligen Position p auch eine von dem Werkzeug 6 relativ zum Werkstück 7 einzunehmende Orientierung α. In diesem Fall werden die Bewegungsbefehle bei ihrer Ausführung durch die Steuereinrichtung 5 der Bearbeitungsmaschine zusätzlich derart umgesetzt, dass das Werkzeug 6 relativ zum Werkstück 7 an den definierten Positionen p die entsprechende Orientierung α einnimmt.

Falls die Bewegungsbefehle auch die Orientierung α des Werkzeugs 6 relativ zum Werkstück 7 definieren, sind weitergehende Auswertungen möglich.

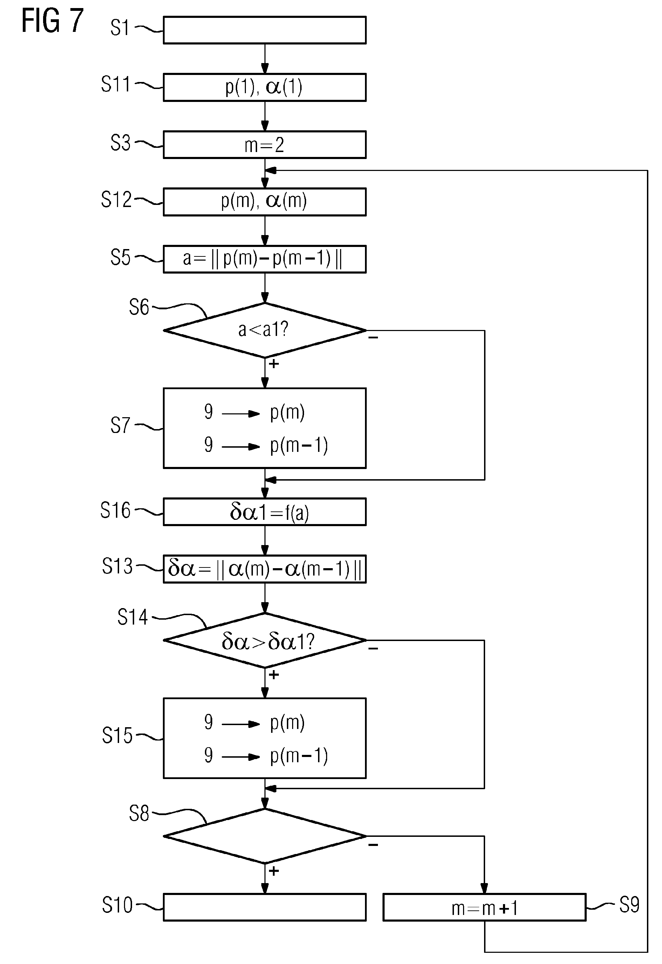

So ist es beispielsweise möglich, die Vorgehensweise von FIG 2 derart zu modifizieren, wie dies nachstehend in Verbindung mit FIG 7 näher erläutert wird.

FIG 7 baut auf der Vorgehensweise von FIG 2 auf. Insbesondere enthält auch die Vorgehensweise gemäß FIG 7 die Schritte S1, S3 sowie S5 bis S10. Diese Schritte werden daher nicht nochmals erläutert.

Die Schritte S2 und S4 sind durch Schritte S11 und S12 ersetzt. Im Schritt S11 selektiert die Recheneinrichtung 1 - analog zum Schritt S2 von FIG 2 - den ersten Bewegungsbefehl der betrachteten Abfolge von Bewegungsbefehlen und ermittelt die zugehörige Position p(1). Zusätzlich ermittelt die Recheneinrichtung 1 im Schritt S11 für die Position p(1) des ersten Bewegungsbefehls die zugehörige Orientierung α(1) des Werkzeugs 6 relativ zum Werkstück 7. In analoger Weise selektiert die Recheneinrichtung 1 im Schritt S12 - analog zum Schritt S4 von FIG 2 - den m-ten Bewegungsbefehl der betrachteten Abfolge und ermittelt die zugehörige Position p(m). Zusätzlich ermittelt die Recheneinrichtung 1 für die Position p(m) des m-ten Bewegungsbefehls die zugehörige Orientierung α(m) des Werkzeugs 6 relativ zum Werkstück 7.

Weiterhin sind zusätzliche Schritte S13 bis S15 vorhanden. Im Schritt S13 ermittelt die Recheneinrichtung 1 die Änderung δα der Orientierung α(m), α(m-1) unmittelbar aufeinanderfolgender Bewegungsbefehle m-1, m. Im Schritt S14 prüft die Recheneinrichtung 1, ob die ermittelte Änderung δα oberhalb einer ersten Maximaländerung δα1 liegt. Wenn dies der Fall ist, ordnet die Recheneinrichtung 1 im Schritt S15 mindestens einer der beiden betreffenden Positionen - also entweder der Position p(m) des m-ten Bewegungsbefehls oder der Position p(m-1) des m-1-ten Bewegungsbefehls - eine jeweilige Markierung 9 zu. Vorzugsweise erfolgt die Zuordnung der Markierung 9 zu beiden betreffenden Positionen p(m), p(m-1). Anderenfalls wird der Schritt S15 übersprungen.

Aufgrund des Vorhandenseins der Schritte S11 bis S15 werden im Rahmen der Ausführung des Schrittes S10 somit nicht nur diejenigen Positionen p, deren Abstand a unterhalb des Minimalabstands a1 liegt, mittels einer Markierung 9 hervorgehoben. Vielmehr werden zusätzlich auch diejenigen Positionen p, deren Änderung δα der Orientierung α oberhalb der ersten Maximaländerung δα1 liegt, mittels einer Markierung 9 hervorgehoben. Wie zuvor können beispielsweise innerhalb der jeweiligen Abfolge die entsprechenden Positionen p entsprechend der Darstellung in FIG 5 umrandet sein. Auch andere Darstellungsarten sind möglich. Beispielsweise können die entsprechenden Positionen p blinkend dargestellt werden oder in einer anderen Farbe dargestellt werden. Die Art der Markierung kann die gleiche sein wie zuvor für die Abstände a. Es kann sich jedoch alternativ um eine andere Markierung handeln.

Im einfachsten Fall ist die erste Maximaländerung δα1 ein fest vorgegebener Wert. Vorzugsweise ist jedoch entsprechend der Darstellung in FIG 7 zusätzlich ein Schritt S16 vorhanden. In diesem Fall bestimmt die Recheneinrichtung 1 im Schritt S16 die erste Maximaländerung δα1 in Abhängigkeit von dem Abstand a der Positionen p(m), p(m-1) der beiden unmittelbar aufeinanderfolgenden Bewegungsbefehle m, m-1 voneinander.

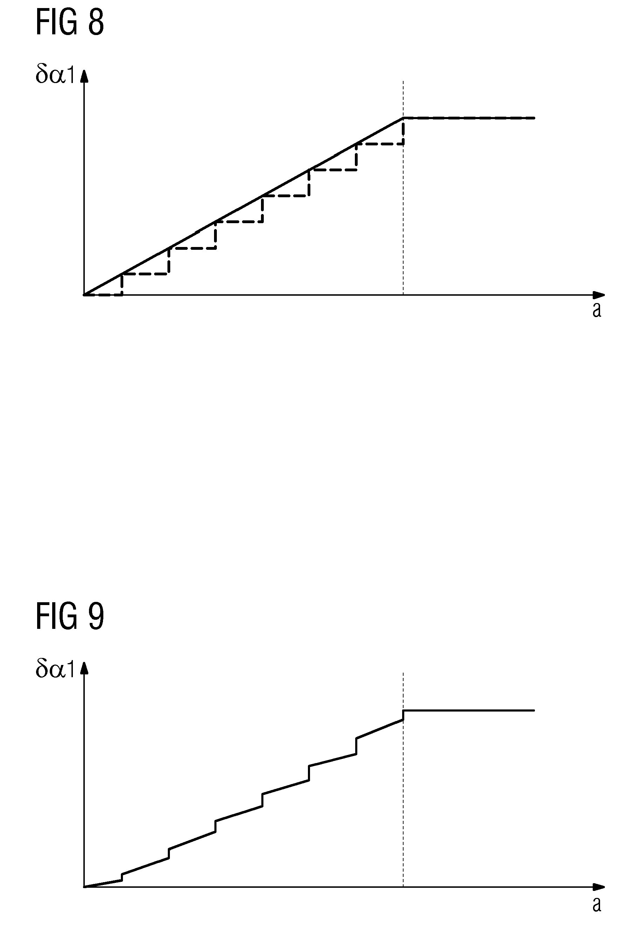

Im Rahmen des Schrittes S16 kann beispielsweise entsprechend der Darstellung in den FIG 8 und 9 die erste Maximaländerung δα1 einen maximalen Wert aufweisen, solange der Abstand a der Positionen p(m), p(m-1) der beiden unmittelbar aufeinanderfolgenden Bewegungsbefehle m, m-1 voneinander oberhalb eines vorbestimmten ersten Grenzabstands liegt. Der maximale Wert kann beispielsweise bei 180° liegen. Er kann aber auch einen anderen Wert aufweisen. Wenn der Abstand a geringer wird, verringert sich jedoch, ausgehend von dem maximalen Wert, auch die erste Maximaländerung δα1. Es ist möglich, dass sich die erste Maximaländerung δα1 mit geringer werdendem Abstand a streng monoton verringert. Dies ist in FIG 8 in durchgezogenen Linien dargestellt. Alternativ ist es möglich, dass sich die erste Maximaländerung δα1 mit geringer werdendem Abstand a abschnittweise verringert. Dies ist in FIG 8 in gestrichelten Linien dargestellt. Entsprechend der Darstellung in FIG 9 ist auch die Kombination dieser beiden Maßnahmen möglich.

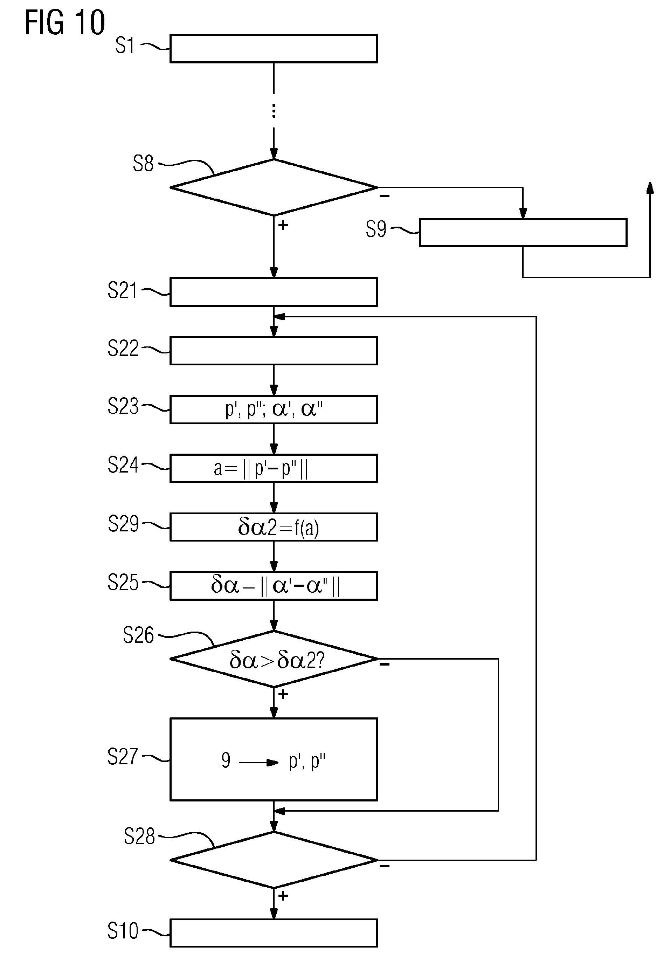

Die Vorgehensweise von FIG 7 kann noch weiter ausgebaut werden. Dies wird nachstehend in Verbindung mit FIG 10 näher erläutert.

Gemäß FIG 10 sind - zusätzlich zu den Schritten von FIG 7 - Schritte S21 bis S28 vorhanden.

Im Schritt S21 ermittelt die Recheneinrichtung 1 für jede Position p diejenigen Positionen p, deren Abstand a unterhalb eines vorbestimmten ersten Mindestabstands a2 liegt. Die zugehörigen Bewegungsbefehle speichert die Recheneinrichtung 1 als jeweiliges Paar von Bewegungsbefehlen ab.

Im Schritt S22 selektiert die Recheneinrichtung 1 eines der Paare von Bewegungsbefehlen. Im Schritt S23 ermittelt die Recheneinrichtung 1 für das selektierte Paar von Bewegungsbefehlen die zugehörigen Positionen p, nachfolgend als p' und p" bezeichnet. Weiterhin ermittelt die Recheneinrichtung 1 im Schritt S23 für das selektierte Paar von Bewegungsbefehlen die zugehörigen Orientierungen α, nachfolgend als α' und α" bezeichnet. Im Schritt S24 ermittelt die Recheneinrichtung 1 den Abstand a der beiden Positionen p', p" voneinander. Ferner ermittelt die Recheneinrichtung 1 im Schritt S25 die Differenz δα der Orientierungen α', α".

Im Schritt S26 prüft die Recheneinrichtung 1, ob die ermittelte Differenz δα oberhalb einer zweiten Maximaländerung δα2 liegt. Wenn dies der Fall ist, ordnet die Recheneinrichtung 1 im Schritt S27 den beiden betreffenden Positionen p' und p" eine jeweilige Markierung 9 zu. Anderenfalls wird der Schritt S27 übersprungen.

Im Schritt S28 prüft die Recheneinrichtung 1, ob sie die Schritte S22 bis S27 bereits für alle im Schritt S21 ermittelten Paare von Bewegungsbefehlen ausgeführt hat. Wenn dies nicht der Fall ist, geht die Recheneinrichtung 1 zum Schritt S22 zurück. Bei der erneuten Ausführung des Schrittes S22 wird selbstverständlich ein anderes Paar von Bewegungsbefehlen selektiert, für das die Schritte S23 bis S27 noch nicht ausgeführt wurden. Anderenfalls ist die Vorgehensweise von FIG 10 abgeschlossen. Insbesondere geht die Recheneinrichtung 1 lediglich noch zum Schritt S10 über, in dem die Recheneinrichtung 1 die Darstellung der durch die Abfolge von Bewegungsbefehlen definierten Bahnkurve an den Anwender 8 ausgibt.

Aufgrund des Vorhandenseins der Schritte S21 bis S28 werden im Rahmen der Ausführung des Schrittes S10 somit zusätzlich auch diejenigen Positionen p', p", bei denen die Differenz δα der Orientierungen α' und α" oberhalb der zweiten Maximaländerung δα2 liegt, mittels einer Markierung 9 hervorgehoben. Wie zuvor können beispielsweise die entsprechenden Positionen p', p" entsprechend der Darstellung in FIG 5 umrandet sein. Auch andere Darstellungsarten sind möglich. Beispielsweise können die entsprechenden Positionen p', p" blinkend dargestellt werden oder in einer anderen Farbe dargestellt werden.

Die Art der Markierung kann die gleiche sein wie zuvor für die Abstände a. Es kann sich jedoch alternativ um eine andere Markierung handeln.

Im einfachsten Fall ist die zweite Maximaländerung δα2 ein fest vorgegebener Wert. Vorzugsweise ist jedoch entsprechend der Darstellung in FIG 8 zusätzlich ein Schritt S29 vorhanden. In diesem Fall bestimmt die Recheneinrichtung 1 im Schritt S29 die zweite Maximaländerung δα2 in Abhängigkeit von dem Abstand a der Positionen p', p" der beiden Bewegungsbefehle des jeweiligen Paares von Bewegungsbefehlen voneinander. Die obenstehenden Ausführungen zur Art der Abhängigkeit der ersten Maximaländerung δα1 vom Abstand a der Positionen p(m), p(m-1) unmittelbar aufeinanderfolgender Bewegungsbefehle können in analoger Weise auch auf die zweite Maximaländerung δα2 angewendet werden. Die zweite Maximaländerung δα2 kann - als Funktion des Abstands a gesehen - denselben Verlauf wie die erste Maximaländerung δα1 aufweisen. Zwingend ist dies jedoch nicht erforderlich.

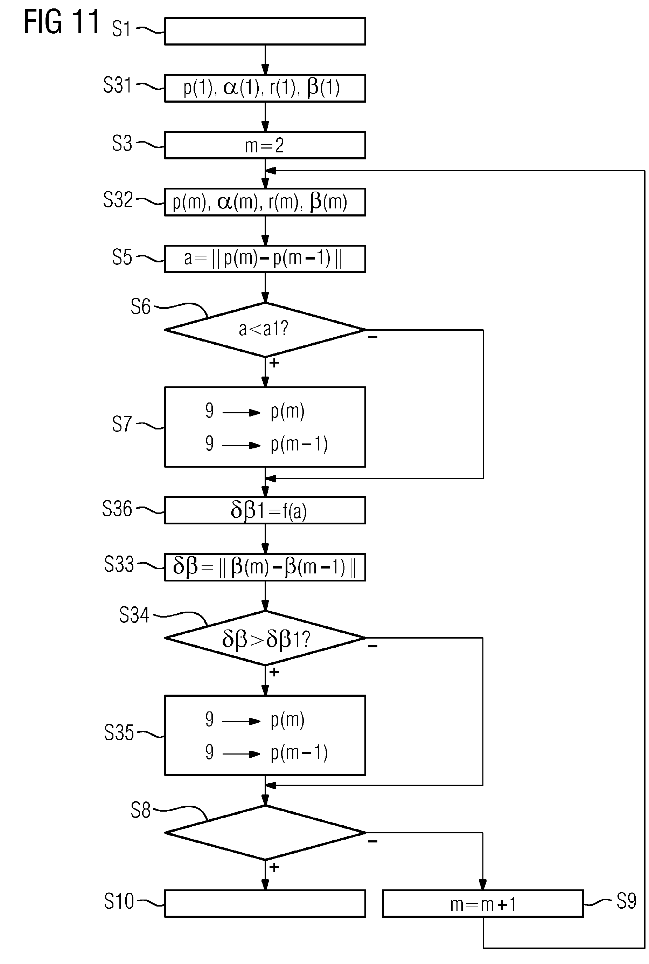

Falls die Bewegungsbefehle auch die Orientierung α des Werkzeugs 6 relativ zum Werkstück 7 definieren, sind ferner auch andere Auswertungen möglich. Diese Auswertungen können alternativ oder zusätzlich zu den Auswertungen gemäß FIG 7 bzw. FIG 10 vorgenommen werden. Diese andere Auswertung wird nachstehend in Verbindung mit FIG 11 näher erläutert.

FIG 11 baut - ebenso wie FIG 7 - auf der Vorgehensweise von FIG 2 auf. Insbesondere enthält auch die Vorgehensweise gemäß FIG 11 die Schritte S1, S3 sowie S5 bis S10. Diese Schritte werden daher nicht nochmals erläutert.

Die Schritte S2 und S4 sind durch Schritte S31 und S32 ersetzt. Im Schritt S31 selektiert die Recheneinrichtung 1 - analog zum Schritt S2 von FIG 2 - den ersten Bewegungsbefehl der betrachteten Abfolge von Bewegungsbefehlen und ermittelt die zugehörige Position p(1). Zusätzlich ermittelt die Recheneinrichtung 1 im Schritt S31 für die Position p(1) des ersten Bewegungsbefehls die zugehörige Orientierung α(1) des Werkzeugs 6 relativ zum Werkstück 7. Weiterhin ermittelt die Recheneinrichtung 1 im Schritt S31 für die Position p(1) die zugehörige Bewegungsrichtung r(1). Schließlich ermittelt die Recheneinrichtung 1 im Schritt S31 das Kreuzprodukt β(1) der Bewegungsrichtung r(1) und der Orientierung α(1). Das Kreuzprodukt β(1) gibt somit eine Richtung an, die sowohl orthogonal zur Bewegungsrichtung r(1) des Werkzeugs 6 bei der Position p(1) ist als auch orthogonal zur Orientierung α(1) des Werkzeugs 6 bei der Position p(1) ist. Der Schritt S32 korrespondiert inhaltlich mit dem Schritt S31, wird jedoch bezogen auf den m-ten Bewegungsbefehl der betrachteten Abfolge ausgeführt.

Weiterhin sind zusätzliche Schritte S33 bis S35 vorhanden. Im Schritt S33 ermittelt die Recheneinrichtung 1 die Änderung δβ des Kreuzprodukts β(m-1), β(m) der beiden unmittelbar aufeinanderfolgenden Bewegungsbefehle m-1, m. Im Schritt S34 prüft die Recheneinrichtung 1, ob die ermittelte Änderung δβ oberhalb einer dritten Maximaländerung δβ1 liegt. Wenn dies der Fall ist, ordnet die Recheneinrichtung 1 im Schritt S35 mindestens einer der beiden betreffenden Positionen - also entweder der Position p(m) des m-ten Bewegungsbefehls oder der Position p(m-1) des m-1-ten Bewegungsbefehls - eine Markierung 9 zu. Vorzugsweise erfolgt die Zuordnung der Markierung 9 zu beiden betreffenden Positionen p(m), p(m-1). Anderenfalls wird der Schritt S35 übersprungen.

Aufgrund des Vorhandenseins der Schritte S31 bis S35 werden im Rahmen der Ausführung des Schrittes S10 somit zusätzlich auch diejenigen unmittelbar aufeinanderfolgenden Positionen p, deren Änderung δβ des Kreuzprodukts β(m), β(m-1) oberhalb der dritten Maximaländerung δβ1 liegt, mittels einer Markierung 9 hervorgehoben. Wie zuvor können beispielsweise innerhalb der jeweiligen Abfolge die entsprechenden Positionen p entsprechend der Darstellung in FIG 5 umrandet sein. Auch andere Darstellungsarten sind möglich. Beispielsweise können die entsprechenden Positionen p blinkend dargestellt werden oder in einer anderen Farbe dargestellt werden. Die Art der Markierung kann die gleiche sein wie zuvor. Es kann sich jedoch alternativ um eine andere Markierung handeln.

Im einfachsten Fall ist die dritte Maximaländerung δβ1 ein fest vorgegebener Wert. Vorzugsweise ist jedoch entsprechend der Darstellung in FIG 11 zusätzlich ein Schritt S36 vorhanden. In diesem Fall bestimmt die Recheneinrichtung 1 im Schritt S36 die dritte Maximaländerung δβ1 in Abhängigkeit von dem Abstand a der Positionen p(m), p(m-1) voneinander. Die obenstehenden Ausführungen zur Art der Abhängigkeit der ersten Maximaländerung δα1 vom Abstand a der Positionen p(m), p(m-1) unmittelbar aufeinanderfolgender Bewegungsbefehle können in analoger Weise auch auf die dritte Maximaländerung δβ1 angewendet werden. Die dritte Maximaländerung δβ1 kann - als Funktion des Abstands a gesehen - denselben Verlauf wie die erste oder die zweite Maximaländerung δα1, δα2 aufweisen. Zwingend ist dies jedoch nicht erforderlich.

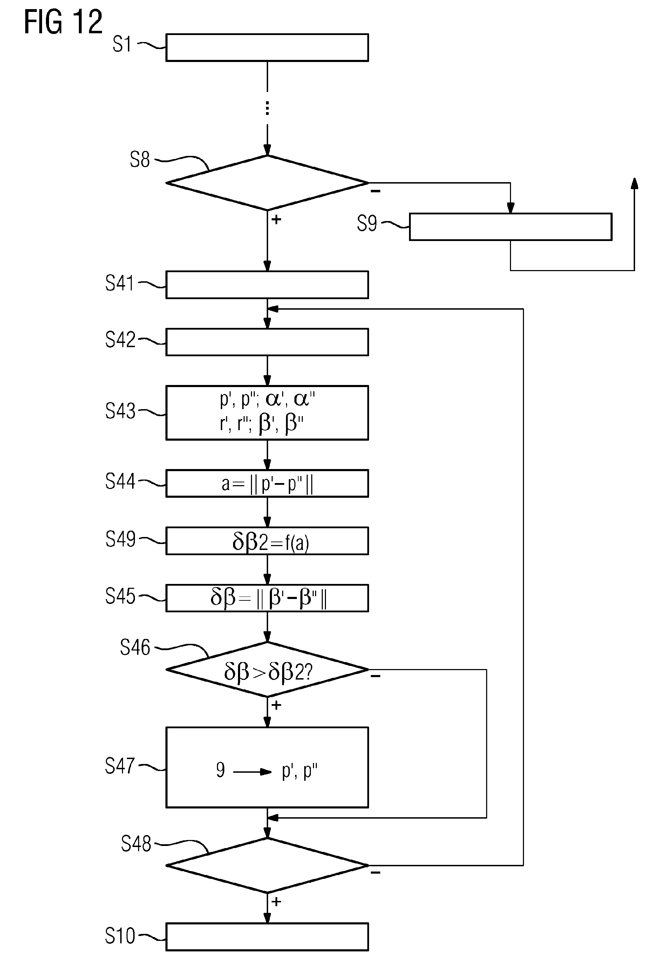

Die Vorgehensweise von FIG 11 kann noch weiter ausgebaut werden. Dies wird nachstehend in Verbindung mit FIG 12 näher erläutert.

Gemäß FIG 12 sind - zusätzlich zu den Schritten von FIG 11 - Schritte S41 bis S48 vorhanden.

Im Schritt S41 ermittelt die Recheneinrichtung 1 für jede Position p diejenigen Positionen p, deren Abstand a unterhalb eines vorbestimmten zweiten Mindestabstands a3 liegt. Die zugehörigen Bewegungsbefehle speichert die Recheneinrichtung 1 als jeweiliges Paar von Bewegungsbefehlen ab.

Im Schritt S42 selektiert die Recheneinrichtung 1 eines der Paare von Bewegungsbefehlen. Im Schritt S43 ermittelt die Recheneinrichtung 1 für das selektierte Paar von Bewegungsbefehlen die zugehörigen Positionen p, nachfolgend als p' und p" bezeichnet. Weiterhin ermittelt die Recheneinrichtung 1 im Schritt S43 für das selektierte Paar von Bewegungsbefehlen die zugehörigen Orientierungen α, nachfolgend als α' und α" bezeichnet. Auch ermittelt die Recheneinrichtung 1 im Schritt S43 für das selektierte Paar von Bewegungsbefehlen die zugehörigen Richtungen r, nachfolgend als r' und r" bezeichnet. Schließlich ermittelt die Recheneinrichtung 1 im Schritt S43 für das selektierte Paar von Bewegungsbefehlen die zugehörigen Kreuzprodukte β, nachfolgend als β' und β" bezeichnet.

Im Schritt S44 ermittelt die Recheneinrichtung 1 den Abstand a der beiden Positionen p' und p" voneinander. Ferner ermittelt die Recheneinrichtung 1 im Schritt S45 die Differenz δβ der Kreuzprodukte β' und β".

Im Schritt S46 prüft die Recheneinrichtung 1, ob die ermittelte Differenz δβ oberhalb einer vierten Maximaländerung δβ2 liegt. Wenn dies der Fall ist, ordnet die Recheneinrichtung 1 im Schritt S47 den beiden betreffenden Positionen p' und p" eine jeweilige Markierung 9 zu. Anderenfalls wird der Schritt S47 übersprungen.

Im Schritt S48 prüft die Recheneinrichtung 1, ob sie die Schritte S42 bis S47 bereits für alle im Schritt S41 ermittelten Paare von Bewegungsbefehlen ausgeführt hat. Wenn dies nicht der Fall ist, geht die Recheneinrichtung 1 zum Schritt S42 zurück. Bei der erneuten Ausführung des Schrittes S42 wird selbstverständlich ein anderes Paar von Bewegungsbefehlen selektiert, für das die Schritte S43 bis S47 noch nicht ausgeführt wurden. Anderenfalls ist die Vorgehensweise von FIG 12 abgeschlossen. Insbesondere geht die Recheneinrichtung 1 lediglich noch zum Schritt S10 über, in dem die Recheneinrichtung 1 die Darstellung der durch die Abfolge von Bewegungsbefehlen definierten Bahnkurve an den Anwender 8 ausgibt.

Aufgrund des Vorhandenseins der Schritte S41 bis S48 werden im Rahmen der Ausführung des Schrittes S10 somit zusätzlich auch diejenigen Positionen p', p", bei denen die Differenz δβ der Kreuzprodukte β' und β" oberhalb der vierten Maximaländerung δβ2 liegt, mittels einer Markierung 9 hervorgehoben. Wie zuvor können beispielsweise die entsprechenden Positionen p', p" entsprechend der Darstellung in FIG 5 umrandet sein. Auch andere Darstellungsarten sind möglich. Beispielsweise können die entsprechenden Positionen p', p" blinkend dargestellt werden oder in einer anderen Farbe dargestellt werden. Die Art der Markierung kann die gleiche sein wie zuvor für die Abstände a. Es kann sich jedoch alternativ um eine andere Markierung handeln.

Im einfachsten Fall ist die vierte Maximaländerung δβ2 ein fest vorgegebener Wert. Vorzugsweise ist jedoch entsprechend der Darstellung in FIG 8 zusätzlich ein Schritt S49 vorhanden. In diesem Fall bestimmt die Recheneinrichtung 1 im Schritt S49 die vierte Maximaländerung δβ2 in Abhängigkeit von dem Abstand a der Positionen p', p" der beiden Bewegungsbefehle des jeweiligen Paares von Bewegungsbefehlen voneinander. Die obenstehenden Ausführungen zur Art der Abhängigkeit der ersten Maximaländerung δα1 vom Abstand a der Positionen p(m), p(m-1) unmittelbar aufeinanderfolgender Bewegungsbefehle können in analoger Weise auch auf die vierte Maximaländerung δβ2 angewendet werden. Die vierte Maximaländerung δβ2 kann - als Funktion des Abstands a gesehen - denselben Verlauf wie die erste, die zweite oder die dritte Maximaländerung δα1, δα2, δβ1 aufweisen. Zwingend ist dies jedoch nicht erforderlich.

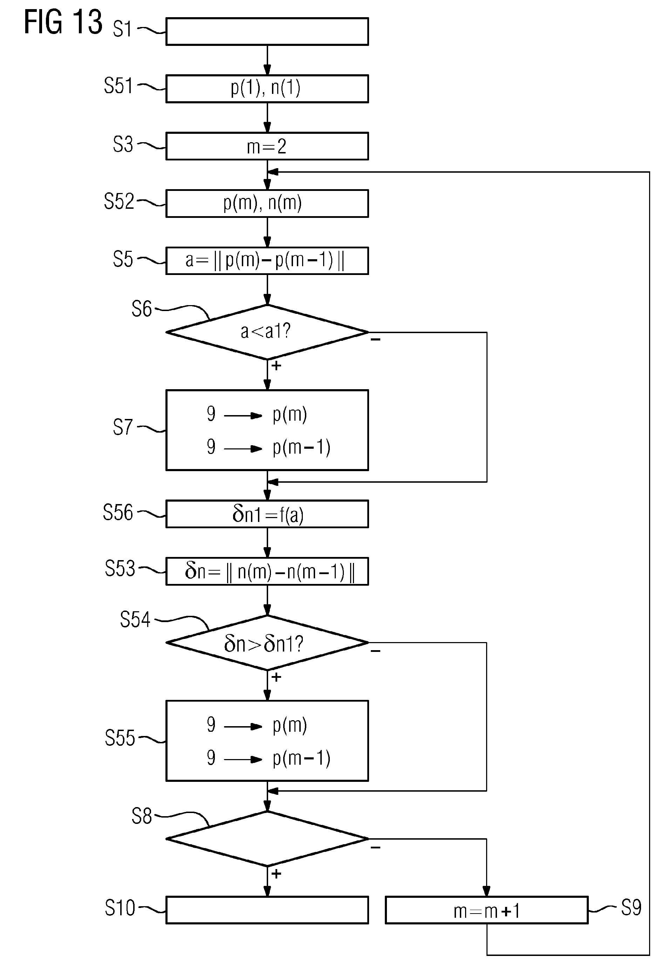

Weiterhin ist es möglich, die Vorgehensweise von FIG 2 derart zu modifizieren, wie dies nachstehend in Verbindung mit FIG 13 näher erläutert wird.

FIG 13 baut auf der Vorgehensweise von FIG 2 auf. Insbesondere enthält auch die Vorgehensweise gemäß FIG 7 die Schritte S1, S3 sowie S5 bis S10. Diese Schritte werden daher nicht nochmals erläutert.

Die Schritte S2 und S4 sind durch Schritte S51 und S52 ersetzt. Im Schritt S52 selektiert die Recheneinrichtung 1 - analog zum Schritt S2 von FIG 2 - den ersten Bewegungsbefehl der betrachteten Abfolge von Bewegungsbefehlen und ermittelt die zugehörige Position p(1). Zusätzlich ermittelt die Recheneinrichtung 1 im Schritt S11 für die Position p(1) des ersten Bewegungsbefehls einen Normalenvektor n(1). Der Normalenvektor n(1) ist entsprechend der Darstellung in FIG 6 orthogonal zu der Oberfläche des Werkstücks 7 an der Position p(1) orientiert. Der Normalenvektor n(1) kann anhand der Bewegungsrichtung r(1) und der Orientierung α(1) ermittelt werden. Beispielsweise kann ausgehend von dem Kreuzprodukt β(1) nochmals das Kreuzprodukt mit der Bewegungsrichtung r(1) ermittelt werden. Der sich dadurch ergebende Vektor korrespondiert nach einer Normierung auf eine vorgegebene Länge mit dem Normalenvektor n(1). Alternativ kann die Komponente der Orientierung α(1), die parallel zur Bewegungsrichtung r(1) gerichtet ist, von der Orientierung α(1) subtrahiert werden. Das Ergebnis der Subtraktion korrespondiert nach einer Normierung auf die vorgegebene Länge ebenfalls mit dem Normalenvektor n(1). Der Schritt S52 korrespondiert inhaltlich mit dem Schritt S51, wird jedoch bezogen auf den m-ten Bewegungsbefehl der betrachteten Abfolge ausgeführt.

Weiterhin sind zusätzliche Schritte S53 bis S55 vorhanden. Im Schritt S53 ermittelt die Recheneinrichtung 1 die Änderung δn der Normalenvektoren n(m), n(m-1) unmittelbar aufeinanderfolgender Bewegungsbefehle m-1, m. Im Schritt S54 prüft die Recheneinrichtung 1, ob die ermittelte Änderung δn oberhalb einer fünften Maximaländerung δn1 liegt. Wenn dies der Fall ist, ordnet die Recheneinrichtung 1 im Schritt S55 mindestens einer der beiden betreffenden Positionen - also entweder der Position p(m) des m-ten Bewegungsbefehls oder der Position p(m-1) des m-1-ten Bewegungsbefehls - eine jeweilige Markierung 9 zu. Vorzugsweise erfolgt die Zuordnung der Markierung 9 zu beiden betreffenden Positionen p(m), p(m-1). Anderenfalls wird der Schritt S55 übersprungen.

Aufgrund des Vorhandenseins der Schritte S51 bis S55 werden im Rahmen der Ausführung des Schrittes S10 somit zusätzlich auch diejenigen Positionen p, deren Änderung δn des Normalenvektors n oberhalb der fünften Maximaländerung δn1 liegt, mittels einer Markierung 9 hervorgehoben. Wie zuvor können beispielsweise innerhalb der jeweiligen Abfolge die entsprechenden Positionen p entsprechend der Darstellung in FIG 5 umrandet sein. Auch andere Darstellungsarten sind möglich. Beispielsweise können die entsprechenden Positionen p blinkend dargestellt werden oder in einer anderen Farbe dargestellt werden. Die Art der Markierung kann die gleiche sein wie zuvor für die Abstände a. Es kann sich jedoch alternativ um eine andere Markierung handeln.

Im einfachsten Fall ist die fünfte Maximaländerung δn1 ein fest vorgegebener Wert. Vorzugsweise ist jedoch entsprechend der Darstellung in FIG 13 zusätzlich ein Schritt S56 vorhanden. In diesem Fall bestimmt die Recheneinrichtung 1 im Schritt S56 die fünfte Maximaländerung δn1 in Abhängigkeit von dem Abstand a der Positionen p(m), p(m-1) der beiden unmittelbar aufeinanderfolgenden Bewegungsbefehle m, m-1 voneinander. Die fünfte Maximaländerung δβ1 kann - als Funktion des Abstands a gesehen - denselben Verlauf wie eine der anderen Maximaländerungen δα1, δα2, δβ1, δβ2 aufweisen. Zwingend ist dies jedoch nicht erforderlich.

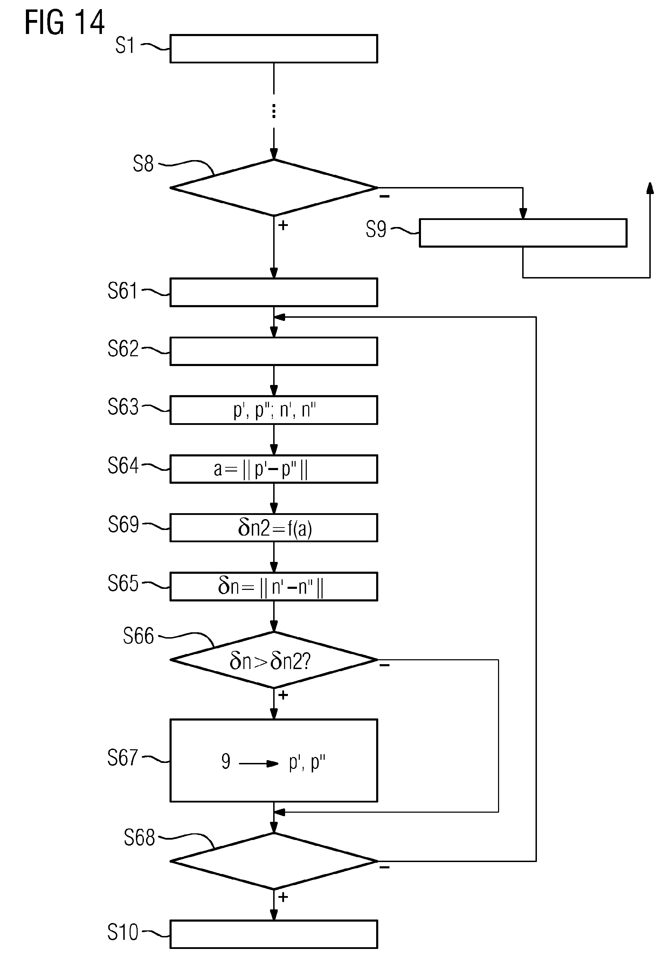

Die Vorgehensweise von FIG 13 kann noch weiter ausgebaut werden. Dies wird nachstehend in Verbindung mit FIG 14 näher erläutert.

Gemäß FIG 14 sind - zusätzlich zu den Schritten von FIG 13 - Schritte S61 bis S68 vorhanden.

Im Schritt S61 ermittelt die Recheneinrichtung 1 für jede Position p diejenigen Positionen p, deren Abstand a unterhalb eines vorbestimmten dritten Mindestabstands a4 liegt. Die zugehörigen Bewegungsbefehle speichert die Recheneinrichtung 1 als jeweiliges Paar von Bewegungsbefehlen ab.

Im Schritt S62 selektiert die Recheneinrichtung 1 eines der Paare von Bewegungsbefehlen. Im Schritt S63 ermittelt die Recheneinrichtung 1 für das selektierte Paar von Bewegungsbefehlen die zugehörigen Positionen p, nachfolgend als p' und p" bezeichnet. Weiterhin ermittelt die Recheneinrichtung 1 im Schritt S63 für das selektierte Paar von Bewegungsbefehlen die zugehörigen Normalenvektoren n, nachfolgend als n' und n" bezeichnet. Im Schritt S64 ermittelt die Recheneinrichtung 1 den Abstand a der beiden Positionen p', p" voneinander. Ferner ermittelt die Recheneinrichtung 1 im Schritt S65 die Differenz δn der Normalenvektoren n', n".

Im Schritt S66 prüft die Recheneinrichtung 1, ob die ermittelte Differenz δn oberhalb einer sechsten Maximaländerung δn2 liegt. Wenn dies der Fall ist, ordnet die Recheneinrichtung 1 im Schritt S67 den beiden betreffenden Positionen p' und p" eine jeweilige Markierung 9 zu. Anderenfalls wird der Schritt S67 übersprungen.

Im Schritt S68 prüft die Recheneinrichtung 1, ob sie die Schritte S62 bis S67 bereits für alle im Schritt S61 ermittelten Paare von Bewegungsbefehlen ausgeführt hat. Wenn dies nicht der Fall ist, geht die Recheneinrichtung 1 zum Schritt S62 zurück. Bei der erneuten Ausführung des Schrittes S62 wird selbstverständlich ein anderes Paar von Bewegungsbefehlen selektiert, für das die Schritte S63 bis S67 noch nicht ausgeführt wurden. Anderenfalls ist die Vorgehensweise von FIG 10 abgeschlossen. Insbesondere geht die Recheneinrichtung 1 lediglich noch zum Schritt S10 über, in dem die Recheneinrichtung 1 die Darstellung der durch die Abfolge von Bewegungsbefehlen definierten Bahnkurve an den Anwender 8 ausgibt.

Aufgrund des Vorhandenseins der Schritte S61 bis S68 werden im Rahmen der Ausführung des Schrittes S10 somit zusätzlich auch diejenigen Positionen p', p", bei denen die Differenz δn der Normalenvektoren n' und n" oberhalb der sechsten Maximaländerung δn2 liegt, mittels einer Markierung 9 hervorgehoben.

Wie zuvor können beispielsweise die entsprechenden Positionen p', p" entsprechend der Darstellung in FIG 5 umrandet sein. Auch andere Darstellungsarten sind möglich. Beispielsweise können die entsprechenden Positionen p', p" blinkend dargestellt werden oder in einer anderen Farbe dargestellt werden. Die Art der Markierung kann die gleiche sein wie zuvor für die Abstände a. Es kann sich jedoch alternativ um eine andere Markierung handeln.

Im einfachsten Fall ist die sechste Maximaländerung δn2 ein fest vorgegebener Wert. Vorzugsweise ist jedoch entsprechend der Darstellung in FIG 8 zusätzlich ein Schritt S69 vorhanden. In diesem Fall bestimmt die Recheneinrichtung 1 im Schritt S69 die sechste Maximaländerung δn2 in Abhängigkeit von dem Abstand a der Positionen p', p" der beiden Bewegungsbefehle des jeweiligen Paares von Bewegungsbefehlen voneinander. Die obenstehenden Ausführungen zur Art der Abhängigkeit der ersten Maximaländerung δα1 vom Abstand a der Positionen p(m), p(m-1) unmittelbar aufeinanderfolgender Bewegungsbefehle können in analoger Weise auch auf die sechste Maximaländerung δn2 angewendet werden. Die sechste Maximaländerung δn2 kann - als Funktion des Abstands a gesehen - denselben Verlauf wie eine der anderen Maximaländerungen δα1, δα2, δβ1, δβ2, δn1 aufweisen. Zwingend ist dies jedoch nicht erforderlich.

Die Ausgestaltungen der FIG 7 und 10 können nach Bedarf alternativ oder zusätzlich zu den Ausgestaltungen der FIG 10 und 12 und/oder alternativ oder zusätzlich zu den Ausgestaltungen der FIG 13 und 14 realisiert werden. Ebenso können die Ausgestaltungen der FIG 10 und 12 nach Bedarf alternativ oder zusätzlich zu den Ausgestaltungen der FIG 13 und 14 realisiert werden.

Zusammengefasst betrifft die vorliegende Erfindung somit folgenden Sachverhalt:

Bewegungsbefehle einer Abfolge von Bewegungsbefehlen definieren jeweils eine von einem Werkzeug 6 einer Bearbeitungsmaschine relativ zu einem Werkstück 7 einzunehmende Position p. Bei der Ausführung der Abfolge von Bewegungsbefehlen durch eine Steuereinrichtung 5 der Bearbeitungsmaschine bearbeitet das Werkzeug 6 das Werkstück 7 zumindest zeitweise. Die Bewegungsbefehle werden bei ihrer Ausführung durch die Steuereinrichtung 5 der Bearbeitungsmaschine in eine die definierten Positionen p enthaltende Bahnkurve umgesetzt. Es wird eine Darstellung der durch die Abfolge von Bewegungsbefehlen definierten Bahnkurve an einen Anwender 8 ausgegeben. Die Abstände a der Positionen p unmittelbar aufeinanderfolgender Bewegungsbefehle voneinander werden ermittelt. Positionen p unmittelbar aufeinanderfolgender Bewegungsbefehle, deren Abstand a unterhalb eines vorbestimmten Minimalabstands a1 liegt, werden in der Darstellung mittels einer Markierung 9 hervorgehoben.

Die vorliegende Erfindung weist viele Vorteile auf. Insbesondere sind für den Anwender 8 diejenigen Stellen des Teileprogramms 4, die als kritisch (im Sinne der erreichten Oberflächenqualität) zu beurteilen sind, leicht und ohne weiteres zu erkennen. Das erfindungsgemäße Auswertungsverfahren ist weiterhin nicht nur mit dem Teileprogramm 4 und den dortigen Bewegungsbefehlen als solchen ausführbar, sondern auch mit den Bewegungsbefehlen, die ausgehend vom Teileprogramm 4 ermittelt werden. Beispiele derartiger Abfolgen von Bewegungsbefehlen sind die Zwischenausgaben nach dem Kompressor der numerischen Steuerung und sogar die Abfolgen von Sollwerten, die an die lagegeregelten Achsen A1 bis An ausgegeben werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Auswertungsverfahren für eine Abfolge von Bewegungsbefehlen,
- wobei die Bewegungsbefehle jeweils eine von einem Werkzeug (6) einer Bearbeitungsmaschine relativ zu einem Werkstück (7) einzunehmende Position (p) definieren,
- wobei bei der Ausführung der Abfolge von Bewegungsbefehlen durch eine Steuereinrichtung (5) der Bearbeitungsmaschine das Werkzeug (6) zumindest zeitweise das Werkstück (7) bearbeitet,
- wobei die Bewegungsbefehle bei ihrer Ausführung durch die Steuereinrichtung (5) der Bearbeitungsmaschine in eine die definierten Positionen (p) enthaltende Bahnkurve umgesetzt werden,
- wobei eine Darstellung der durch die Abfolge von Bewegungsbefehlen definierten Bahnkurve an einen Anwender (8) ausgegeben wird,
**dadurch gekennzeichnet,**
- **dass** die Abstände (a) der Positionen (p) unmittelbar aufeinanderfolgender Bewegungsbefehle voneinander ermittelt werden und
- **dass** Positionen (p) unmittelbar aufeinanderfolgender Bewegungsbefehle, deren Abstand (a) unterhalb eines vorbestimmten Minimalabstands (a1) liegt, in der Darstellung mittels einer Markierung (9) hervorgehoben werden.

2. Auswertungsverfahren nach Anspruch 1,
**dadurch gekennzeichnet,**
- **dass** die Bewegungsbefehle zusätzlich zur jeweiligen Position (p) auch eine von dem Werkzeug (6) relativ zum Werkstück (7) einzunehmende Orientierung (α) definieren,
- **dass** die Bewegungsbefehle bei ihrer Ausführung durch die Steuereinrichtung (5) der Bearbeitungsmaschine derart umgesetzt werden, dass das Werkzeug (6) relativ zum Werkstück (7) an den definierten Positionen (p) die entsprechende Orientierung (α) einnimmt,
- **dass** zusätzlich die Änderung (δα) der Orientierung (α) unmittelbar aufeinanderfolgender Bewegungsbefehle ermittelt wird und
- **dass** Positionen (p) unmittelbar aufeinanderfolgender Bewegungsbefehle, deren Änderung (δα) der Orientierung (α) oberhalb einer ersten Maximaländerung (δα1) liegt, mittels einer Markierung (9) hervorgehoben werden.

3. Auswertungsverfahren nach Anspruch 2,
**dadurch gekennzeichnet,**
**dass** die erste Maximaländerung (δα1) in Abhängigkeit von dem Abstand (a) der Positionen (p) der jeweiligen unmittelbar aufeinanderfolgenden Bewegungsbefehle voneinander bestimmt wird.

4. Auswertungsverfahren nach Anspruch 2 oder 3,
**dadurch gekennzeichnet,**
- **dass** für die von dem Werkzeug (6) einzunehmenden Positionen (p) jeweils Paare von Bewegungsbefehlen ermittelt werden, deren jeweilige Position (p) unterhalb eines vorbestimmten ersten Mindestabstands (a2) liegt,
- **dass** für die Paare von Bewegungsbefehlen die Differenz der von dem Werkzeug (6) relativ zum Werkstück (7) einzunehmenden Orientierungen (α) ermittelt wird und
- **dass** Positionen (p) von Paaren von Bewegungsbefehlen, bei denen die Differenz (δα) der Orientierungen (α) oberhalb einer zweiten Maximaländerung (δα2) liegt, mittels einer Markierung (9) hervorgehoben werden.

5. Auswertungsverfahren nach Anspruch 4,
**dadurch gekennzeichnet,**
**dass** die zweite Maximaländerung (δα2) in Abhängigkeit von dem Abstand (a) der Positionen (p) der beiden Bewegungsbefehle des jeweiligen Paares von Bewegungsbefehlen voneinander bestimmt wird.

6. Auswertungsverfahren nach einem der obigen Ansprüche,
**dadurch gekennzeichnet,**
- **dass** die Bewegungsbefehle zusätzlich zur jeweiligen Position (p) auch eine von dem Werkzeug (6) relativ zum Werkstück (7) jeweils einzunehmende Orientierung (α) und eine jeweilige Bewegungsrichtung (r) definieren,
- **dass** die Bewegungsbefehle bei ihrer Ausführung durch die Steuereinrichtung (5) der Bearbeitungsmaschine derart umgesetzt werden, dass das Werkzeug (6) relativ zum Werkstück (7) an den definierten Positionen (p) die entsprechende Orientierung (α) einnimmt und in der entsprechenden Bewegungsrichtung (r) verfahren wird,
- **dass** für die von dem Werkzeug (6) einzunehmenden Positionen (p) zusätzlich jeweils das Kreuzprodukt (β) der Bewegungsrichtung (r) und der Orientierung (α) ermittelt wird,
- **dass** die Änderung (δβ) der Richtung des Kreuzprodukts (β) unmittelbar aufeinanderfolgender Bewegungsbefehle ermittelt wird und
- **dass** Positionen (p) unmittelbar aufeinanderfolgender Bewegungsbefehle, deren Änderung (δβ) der Richtung des Kreuzprodukts (β) oberhalb einer dritten Maximaländerung (δβ1) liegt, mittels einer Markierung (9) hervorgehoben werden.

7. Auswertungsverfahren nach Anspruch 6,
**dadurch gekennzeichnet,**
**dass** die dritte Maximaländerung (δβ1) in Abhängigkeit von dem Abstand (a) der Positionen (p) der jeweiligen unmittelbar aufeinanderfolgenden Bewegungsbefehle voneinander bestimmt wird.

8. Auswertungsverfahren nach Anspruch 6 oder 7,
**dadurch gekennzeichnet,**
- **dass** für die von dem Werkzeug (6) einzunehmenden Positionen (p) jeweils Paare von Bewegungsbefehlen ermittelt werden, deren jeweilige Position (p) unterhalb eines vorbestimmten zweiten Mindestabstands (a3) liegt,
- **dass** für die Paare von Bewegungsbefehlen die Differenz (δβ) der Richtungen der Kreuzprodukte (β) ermittelt wird und
- **dass** Positionen (p) von Paaren von Bewegungsbefehlen, bei denen die Differenz (δβ) der Richtungen der Kreuzprodukte (β) oberhalb einer vierten Maximaländerung (δβ2) liegt, mittels einer Markierung (9) hervorgehoben werden.

9. Auswertungsverfahren nach Anspruch 8,
**dadurch gekennzeichnet,**
**dass** die vierte Maximaländerung (δβ2) in Abhängigkeit von dem Abstand (a) der Positionen (p) der beiden Bewegungsbefehle des jeweiligen Paares von Bewegungsbefehlen voneinander bestimmt wird.

10. Auswertungsverfahren nach einem der obigen Ansprüche,
**dadurch gekennzeichnet,**
- **dass** die Bewegungsbefehle zusätzlich zur jeweiligen Position (p) auch eine von dem Werkzeug (6) relativ zum Werkstück (7) jeweils einzunehmende Orientierung (α) und eine jeweilige Bewegungsrichtung (r) definieren,
- **dass** die Bewegungsbefehle bei ihrer Ausführung durch die Steuereinrichtung (5) der Bearbeitungsmaschine derart umgesetzt werden, dass das Werkzeug (6) relativ zum Werkstück (7) an den definierten Positionen (p) die entsprechende Orientierung (α) einnimmt und in der entsprechenden Bewegungsrichtung (r) verfahren wird,
- **dass** für die von dem Werkzeug (6) einzunehmenden Positionen (p) zusätzlich anhand der Bewegungsrichtung (r) und der Orientierung (α) ein orthogonal zu der Oberfläche des Werkstücks (7) an der jeweiligen Position (p) orientierter Normalenvektor (n) ermittelt wird,
- **dass** die Änderung (δn) der Richtung des Normalenvektors (n) unmittelbar aufeinanderfolgender Bewegungsbefehle ermittelt wird und
- **dass** Positionen (p) unmittelbar aufeinanderfolgender Bewegungsbefehle, deren Änderung (δn) der Richtung des Normalenvektors (n) oberhalb einer fünften Maximaländerung (δn1) liegt, mittels einer Markierung (9) hervorgehoben werden.

11. Auswertungsverfahren nach Anspruch 10,
**dadurch gekennzeichnet,**
**dass** die fünfte Maximaländerung (δn1) in Abhängigkeit von dem Abstand (a) der Positionen (p) der jeweiligen unmittelbar aufeinanderfolgenden Bewegungsbefehle voneinander bestimmt wird.

12. Auswertungsverfahren nach Anspruch 10 oder 11,
**dadurch gekennzeichnet,**
- **dass** für die von dem Werkzeug (6) einzunehmenden Positionen (p) jeweils Paare von Bewegungsbefehlen ermittelt werden, deren jeweilige Position (p) unterhalb eines vorbestimmten dritten Mindestabstands (a4) liegt,
- **dass** für die Paare von Bewegungsbefehlen die Differenz (δn) der Richtungen der Normalenvektoren (n) ermittelt wird und
- **dass** Positionen (p) von Paaren von Bewegungsbefehlen, bei denen die Differenz (δn) der Richtungen der Normalenvektoren (n) oberhalb einer sechsten Maximaländerung (δn2) liegt, mittels einer Markierung (9) hervorgehoben werden.

13. Auswertungsverfahren nach Anspruch 12,
**dadurch gekennzeichnet,**
**dass** die sechste Maximaländerung (δn2) in Abhängigkeit von dem Abstand (a) der Positionen (p) der beiden Bewegungsbefehle des jeweiligen Paares von Bewegungsbefehlen voneinander bestimmt wird.

14. Computerprogramm, das Maschinencode (3) umfasst, der von einer Recheneinrichtung (1) abarbeitbar ist, wobei die Abarbeitung des Maschinencodes (3) durch die Recheneinrichtung (1) bewirkt, dass die Recheneinrichtung (1) ein Auswertungsverfahren nach einem der obigen Ansprüche ausführt.

15. Recheneinrichtung, wobei die Recheneinrichtung mit einem Computerprogramm (2) nach Anspruch 14 programmiert ist, so dass sie im Betrieb ein Auswertungsverfahren nach einem der Ansprüche 1 bis 13 ausführt.
